# EUROPÄISCHE PATENTSCHRIFT

(11) **EP 3 474 529 B1**
(45) Veröffentlichungstag und Bekanntmachung des Hinweises auf die Patenterteilung: **03.11.2021**
(21) Anmeldenummer: 18195167.4
(22) Anmeldetag: 18.09.2018
(51) Int. Cl.: H04N 1/028

(54) **BELEUCHTUNG FÜR OPTISCHE DOKUMENTENERFASSUNG**
ILLUMINATION FOR OPTICAL DOCUMENT CAPTURE
ÉCLAIRAGE POUR LA SAISIE DE DOCUMENTS OPTIQUE

(30) Priorität: 20.10.2017 DE 102017124572
(43) Veröffentlichungstag der Anmeldung: 24.04.2019
(73) Patentinhaber: Bundesdruckerei GmbH, 10969 Berlin (DE)
(72) Erfinder: Rabeler, Uwe, 30453 Hannover (DE); Thater, Marcel, 30952 Ronnenberg (DE)
(74) Vertreter: Hentrich Patentanwälte PartG mbB

(56) Entgegenhaltungen:
- DE-A1-102014 205 363
- US-A- 6 049 433
- US-A1- 2009 073 698
- F.Z. FANG ET AL: "Manufacturing and measurement of freeform optics", CIRP ANNALS., Bd. 62, Nr. 2, 1. Januar 2013 (2013-01-01) , Seiten 823-846, XP055561153, NL, CH, FR ISSN: 0007-8506, DOI: 10.1016/j.cirp.2013.05.003

## Beschreibung

### Gegenstand der Erfindung

Die vorliegende Erfindung betrifft eine Vorrichtung und ein Verfahren zur optischen Erfassung, zum Beispiel zur optischen Prüfung, eines Dokuments.

### Hintergrund der Erfindung

Zur Prüfung von Dokumenten mit Sicherheitsmerkmalen, wie zum Beispiel Ausweisen, Reispässen, Banknoten oder Etiketten, werden üblicherweise optische Methoden verwendet. Heutige Dokumentenprüfgeräte, sogenannte "Full Page Reader", nutzen zum Beispiel LEDs mit einem Diffusor oder einer Projektionsoptik als Lichtquelle für die Dokumenteninspektion. Ziel der Dokumentenaufnahme ist es unter anderem, die Datenseiten ohne störende Artefakte bei hohem Kontrast aufzunehmen. Full-Page-Reader verfügen in der Regel über eine direkte Beleuchtung der Dokumentenauflagefläche. Dies führt zu einem stark variierenden Verlauf der Lichtintensität auf der beleuchteten Dokumentenauflagefläche.

Die Lichtverteilung bei heutigen Geräten ist oft inhomogen und weist ungünstige Beleuchtungswinkel auf. Dies führt zu einem starken Kontrastverlauf bei der Aufnahme sowie zu störenden Artefakten. Insbesondere führen bei einer Sicherung der ID Dokumente durch Hologramme die holografischen Sicherheitsmerkmale bei bestimmten Beleuchtungswinkeln zu sogenannten VIS-Artefakten wie Reflexionen und überstrahlten Bereichen. Somit können weder das Lichtbild noch die Daten der visuellen Inspektionszone frei aufgenommen und später ausgewertet werden.

Bekannte Ansätze wie die Verwendung von seitlichen Lichtleitplatten führen zwar im Vergleich zu einer direkten Beleuchtung der Dokumentenauflagefläche zu einer homogeneren Ausleuchtung, beseitigen aber nicht restlos die störenden Artefakte, die insbesondere durch die relativ flachen Beleuchtungswinkel bedingt sind. Ein solcher Ansatz wird zum Beispiel in dem Dokument DE 10 2014 205 363 A1 verfolgt, in dem eine Vorrichtung und ein Verfahren zur optischen Erfassung eines Dokuments beschrieben wird, wobei mittels einer seitlich unter der Dokumentenauflagefläche angeordneten Beleuchtungseinrichtung Licht seitlich in ein Lichtleitelement eingekoppelt wird und von diesem in ein die Dokumentenauflagefläche umfassendes Aufnahmevolumen ausgekoppelt wird.

In dem Dokument US 6 049 433 wird ein Scanner mit einer transparenten, beleuchteten Auflagefläche für ein zu scannendes Objekt offenbart. Ein weiterer Scanner ist aus der US 2009/073 698 bekannt.

Es ist daher wünschenswert, die Homogenität der Ausleuchtung weiter zu verbessern und störende Artefakte zu vermeiden.

### Beschreibung der Erfindung

Vor dem beschriebenen Hintergrund ist es Aufgabe der vorliegenden Erfindung, eine Vorrichtung und ein Verfahren zur optischen Erfassung eines Dokuments mit einer verbesserten Ausleuchtung zur Verfügung zu stellen. Die Aufgabe wird durch eine Vorrichtung zur optischen Erfassung eines Dokuments nach Anspruch 1 und ein Verfahren zur optischen Erfassung eines Dokuments nach Anspruch 13 gelöst. Die abhängigen Ansprüche enthalten weitere, vorteilhafte Ausgestaltungen der Erfindung.

Die erfindungsgemäße Vorrichtung zur optischen Erfassung eines Dokuments, insbesondere zu optischen Prüfung eines Dokuments, umfasst eine Dokumentenauflage mit einer Oberfläche zum Auflegen eines Dokuments und mindestens ein Beleuchtungselement zum Beleuchten der Oberfläche. Das mindestens eine Beleuchtungselement umfasst mindestens eine Projektionsoptik, zum Aussenden von Licht und mindestens einen Freiform-Reflektor. Das Beleuchtungselement ist zur indirekten Beleuchtung der Oberfläche ausgelegt ist. Der Freiform-Reflektor umfasst eine Anzahl an Freiform-Reflektor-Elementen, vorzugsweise eine Mehrzahl oder Vielzahl an einzelnen, jeweils voneinander verschieden ausgestalteten Freiform-Reflektor-Elementen.

Als Freiform-Reflektoren werden im Rahmen der vorliegenden Erfindung sogenannte "Macrofocal Free Form Reflektoren" verstanden. Dies sind Freiformspiegel, die aus miteinander verbundenen Reflektor-Elementen, zum Beispiel Kacheln, aufgebaut sind. Jedes Reflektor-Element kann dabei eine individuelle frei gestaltbare bzw. beliebige Form seiner reflektierenden Oberfläche besitzen. Insbesondere kann ein Reflektor-Element jedoch eine ebene reflektierende Oberfläche besitzen. Durch die Kombination aus einer Projektionsoptik und einem "Macrofocal Reflektor" ist es möglich die Dokumentenauflage bzw. das Dokument homogen, diffus und ohne die Erzeugung störender Artefakte zu beleuchten. Der aus den Reflektor-Elementen zusammengesetzte Freiform-Reflektor kann die Form einer Projektionsoptik wie beispielsweise eines Hohlspiegels durch die Reflektor-Elemente approximieren. Auf diese Weise wird das vom Freiform-Reflektor reflektierte Licht nicht exakt gebündelt, aber dennoch gesammelt auf eine Umgebung eines Brennpunktes der approximierten Projektionsoptik gelenkt.

Die hier beschriebene Erfindung löst zum einem das Problem der homogenen Beleuchtung und zum anderen werden störende Artefakte durch ungünstige flache Beleuchtungswinkel vermieden. Es hat sich insbesondere herausgestellt, dass Beleuchtungswinkel von 30 Grad (30°) bis 50 Grad (50°) bezogen auf die Senkrechte der Oberfläche zur Auflage des Dokuments Artefakte verursachen und daher unerwünscht sind. Durch eine entsprechende Ausgestaltung und Anordnung des mindestens einen Freiform-Reflektors können diese Beleuchtungswinkel vermieden werden.

In einer vorteilhaften Variante umfasst die erfindungsgemäße Vorrichtung mindestens zwei Beleuchtungselemente, vorteilhafterweise mindestens vier, bevorzugt vier, Beleuchtungselemente. Dadurch ist eine Anordnung der Beleuchtungselemente an der Seite bzw. am Rand der indirekt zu beleuchtenden Oberfläche möglich, wobei gleichzeitig eine gleichmäßige Ausleuchtung der Oberfläche ermöglicht wird.

Prinzipiell können die einzelnen Freiform-Reflektor-Elemente mit einer individuellen Oberflächengeometrie ausgestaltet sein, sich also beispielsweise hinsichtlich der Oberflächengeometrie ihrer reflektierenden Oberfläche jeweils voneinander unterscheiden. Dies verbessert die Homogenität der Ausleuchtung. Alternativ dazu können eine Anzahl, insbesondere auch alle, Freiform-Reflektor-Elemente mit einer identischen Freiform-Oberflächengeometrie ausgestaltet sein. Dies hat den Vorteil, dass identische Freiform-Reflektor-Elemente kostengünstig hergestellt und zu einem Freiform-Reflektor miteinander kombiniert werden können.

Der Freiform-Reflektor kann einen parabolisch und/oder hyperbolisch und/oder elliptisch geformten reflektierenden Oberflächenbereich umfassen. Es kann also die reflektierende Oberfläche des Freiform-Reflektors insgesamt oder teilweise eine parabolische und/oder hyperbolische und/oder elliptische Form aufweisen. Das hat den Vorteil, dass sich gezielt Reflektionswinkel und damit Beleuchtungswinkel einstellen oder vermeiden lassen, zum Beispiel Beleuchtungswinkel zwischen 30 Grad (30°) und 50 Grad (50°) bezogen auf die Senkrechte der Oberfläch e zur Auflage des Dokuments.

Vorzugsweise sind die Freiform-Reflektor-Elemente als Kacheln, zum Beispiel als n-eckige Kacheln, ausgestaltet. Eine quadratische, rechteckige, sechseckige oder dreieckige Ausgestaltung hat den Vorteil, dass die einzelnen Freiform-Reflektor-Elemente übergangslos miteinander verbunden werden können. In einer bevorzugten Variante sind die Freiform-Reflektor-Elemente miteinander verbunden, vorteilhafterweise übergangslos. Dadurch werden unter Umständen störende oder unerwünschte, durch Übergänge zwischen den Freiform-Reflektor-Elementen hervorgerufene Reflektionen vermieden.

Der mindestens eine Freiform-Reflektor weist eine Oberflächengeometrie auf, die so ausgestaltet ist, dass die Oberfläche mit festgelegten Beleuchtungswinkeln nicht beleuchtet wird und/oder nur mit bestimmten Beleuchtungswinkeln beleuchtet wird. Dies ermöglicht eine artefaktfreie

Ausleuchtung. Zum Beispiel kann der mindestens eine Freiform-Reflektor so ausgestaltet sein, dass die Oberfläche nicht mit Beleuchtungswinkeln zwischen 30 Grad (30°) und 50 Grad (50°) in Bezug a uf die Senkrechte der Oberfläche, also gemessen von der Senkrechten, beleuchtet wird. Beleuchtungswinkel aus dem genannten Bereich werden mit anderen Worten hierbei ausgeschlossen.

In einer vorteilhaften Variante ist die Projektionsoptik zur Mischung von Licht unterschiedlicher Wellenlängen ausgelegt. Die Projektionsoptik kann insbesondere zur Mischung unterschiedlicher Spektralbereiche, zum Beispiel zur Mischung von wenigstens zwei Ausgewählten von ultraviolettem Licht (UV), also Licht aus einem Wellenlängenbereich von 100 Nanometern bis 380 Nanometern, sichtbarem Licht, also Licht aus einem Wellenlängenbereich von 380 Nanometern bis 780 Nanometern, und infrarotem Licht (IR), also Licht aus einem Wellenlängenbereich von 780 Nanometern bis 1 Millimeter, ausgelegt sein. Bei dem zu mischenden Licht kann es sich um UV-C Licht und/oder UV-B Licht und/oder UV-A Licht und/oder langwelliges IR-Licht, zum Beispiel 900 Nanometer, und/oder Weißlicht handeln. Die Mischung von Licht unterschiedlicher Wellenlängen und/oder unterschiedlicher Spektralbereichen hat den Vorteil, dass eine maximal diffuse Beleuchtung erzielt werden kann, während für die Dokumentenerfassung, insbesondere für die Dokumentenprüfung ein breites Analysespektrum zur Verfügung steht.

Vorteilhafterweise umfasst die Vorrichtung mindestens eine optische Erfassungseinrichtung zur Detektion von Licht, welches von einem auf die Oberfläche aufgelegten Dokument reflektiert wird. Die optische Erfassungseinrichtung kann einen Sensor und/oder eine Kamera und/oder ein Objektiv umfassen. Die Erfassungseinrichtung ermöglicht eine optische Aufnahme oder Prüfung des Dokuments bzw. von sicherheitsrelevanten Merkmalen des Dokuments.

Im Rahmen des erfindungsgemäßen Verfahrens zum optischen Erfassen, zum Beispiel zum optischen Prüfen, eines an einer Oberfläche angeordneten Dokumentes wird von einer Projektionsoptik Licht zu mindestens einem Freiform-Reflektor, der eine Anzahl, vorzugsweise eine Mehrzahl oder Vielzahl an Freiform-Reflektor-Elementen umfasst, ausgesendet. Die Oberfläche wird durch das von dem Freiform-Reflektor reflektierte Licht beleuchtet. Vorzugsweise wird die Oberfläche ausschließlich indirekt durch das von dem Freiform-Reflektor reflektierte Licht beleuchtet.

Das Verfahren zum optischen Erfassen kann zum Beispiel unter Verwendung einer oben beschriebenen erfindungsgemäßen Vorrichtung durchgeführt werden. Die indirekte Beleuchtung mittels eines Freiform-Reflektors hat den Vorteil, dass die Homogenität der Ausleuchtung verbessert wird und unerwünschte Artefakte vermieden werden. Bevorzugt wird die Oberfläche ausschließlich indirekt beleuchtet.

Das erfindungsgemäße Verfahren hat grundsätzlich dieselben Vorteile wie die oben beschriebene erfindungsgemäße Vorrichtung. Es kann unter Nutzung aller oben beschriebenen Vorrichtungsmerkmale mit den damit verbundenen Vorteilen ausgeführt werden.

Zusammenfassend hat die vorliegende Erfindung folgende Vorteile: Es wird eine maximal diffuse Beleuchtung ermöglicht. Weiterhin wird eine homogene Beleuchtung, insbesondere mit höchstens geringfügigem Randabfall, erreicht. Artefakte durch bestimmte Beleuchtungswinkel, zum Beispiel zwischen 30 Grad und 50 Grad bezogen auf die Senkrechte der Auflagefläche, können wirksam vermieden werden. Die Erfindung ist gleichzeitig geeignet für alle derzeitigen Beleuchtungsquellen, insbesondere UV-A, sichtbares Licht und IR (zum Beispiel 900 Nanometer), aber auch für UV-B und UV-C sowie langwelliges IR. Prinzipiell werden im Vergleich zu bisherigen Lösungen weniger LEDs zur Ausleuchtung benötigt. Damit ist auch weniger Bauraum erforderlich. Die erfindungsgemäße Vorrichtung lässt sich darüber hinaus kostengünstig mit üblichen Spritzgussverfahren fertigen. Zudem besteht die Möglichkeit einer Skalierung der Lösung und eines Aufbaus mit mehreren "Macrofocal Reflektoren".

Im Rahmen verschiedener Anwendungen, zum Beispiel in einem Dokumentenprüfgerät oder in einem Dokumenten-Referenzaufnahmesystem, können Dokumente homogen und artefaktfrei unter verschiedenen Beleuchtungsspektren aufgenommen werden.

### Beschreibung von Ausführunqsbeispielen

Weitere Merkmale, Eigenschaften und Vorteile der vorliegenden Erfindung werden im Folgenden anhand von Ausführungsvarianten unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Die im Folgenden beschriebenen Ausführungsvarianten stellen lediglich Beispiele dar, welche den Gegenstand der Erfindung jedoch nicht beschränken.
- Fig. 1: zeigt schematisch ein Beleuchtungselement zum Beleuchten einer Oberfläche zum Auflegen eines Dokuments im Rahmen einer optischen Erfassung des Dokuments in einem Längsschnitt.
- Fig. 2: zeigt schematisch eine erfindungsgemäße Vorrichtung zur optischen Erfassung eines Dokuments in einer geschnittenen Ansicht.
- Fig. 3: zeigt schematisch die in der Figur 2 gezeigte Vorrichtung zur optischen Erfassung eines Dokuments in einer Ansicht von oben.
- Fig. 4: zeigt schematisch einen Freiform-Reflektor in einer perspektivischen Ansicht.
- Fig. 5: zeigt schematisch ein einzelnes Freiform-Reflektor-Element in einer perspektivischen Ansicht.

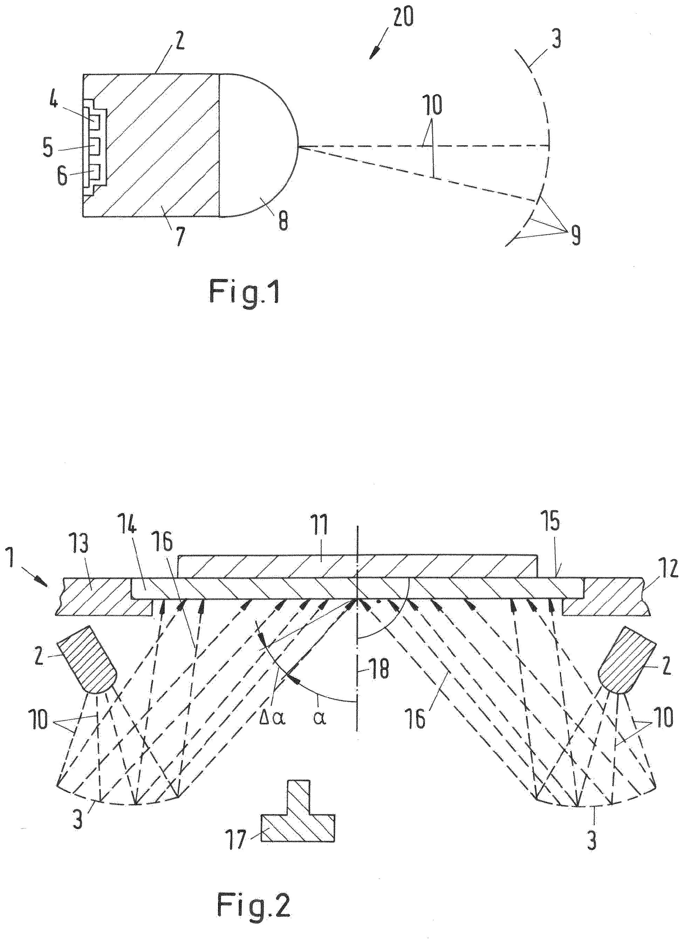

Ein Ausführungsbeispiel der vorliegenden Erfindung unter Berücksichtigung von weiteren Ausführungsvarianten wird im Folgenden anhand der Figuren 1 bis 5 näher erläutert. Einander entsprechende Komponenten werden dabei mit denselben Bezugsziffern gekennzeichnet.

Die Figur 1 zeigt schematisch ein Beleuchtungselement 20 zum Beleuchten einer Oberfläche zum Auflegen eines Dokuments im Rahmen einer optischen Erfassung oder Prüfung des Dokuments in einem Längsschnitt. Das Beleuchtungselement 20 umfasst eine Projektionsoptik 2 zum Aussenden von Licht 10 und einen Freiform-Reflektor 3.

Die Projektionsoptik 2 umfasst eine Anzahl an Lichtquellen 4, 5 und 6. In dem vorliegenden Beispiel sind die Lichtquellen als LEDs ausgestaltet. Die LED 4 kann beispielsweise infrarotes Licht aussenden, die LED 5 kann beispielsweise weißes Licht aussenden und die LED 6 kann beispielsweise ultraviolettes Licht in der Form von UV-A Strahlung aussenden. Grundsätzlich können auch andere Lichtquellen und eine andere Anzahl an Lichtquellen vorgesehen sein. Das von den Lichtquellen 4, 5 und 6 ausgesendete Licht wird in das Bauelement zum Mischen von Spektren 7 eingekoppelt und dort gemischt. Das gemischte Licht wird über das Bauelement 8, welches eine oder mehrere Linsen umfassen kann, in Richtung auf den Freiform-Reflektor 3 ausgekoppelt und gegebenenfalls fokussiert.

Prinzipiell werden mittels der Projektionsoptik 2 die unterschiedlichen Lichtspektren der verwendeten Lichtquellen gemischt und beispielsweise mittels mindestens einer Linse 8 zur direkten Beleuchtung des Freiform-Reflektors 3 gebündelt. Bei geeigneter Wahl des Materials ist eine Mischung der Spektren UVC-, UVB-, UVA-, Weiß- sowie Infrarot-Licht möglich.

Der Freiform-Reflektor 3 umfasst eine Mehrzahl, bevorzugt eine Vielzahl, an einzelnen bzw. separaten Freiform-Reflektor-Elementen 9. Der Freiform-Reflektor 3 ist mit anderen Worten als "macrofocal" Reflektor, also mit einer Vielzahl von Fokuspunkten oder Fokusflächen, ausgestaltet. Die einzelnen Freiform-Reflektor-Elemente 9 können eine jeweils individuell gestaltete reflektierende Oberfläche aufweisen. Die reflektierende Oberfläche ist dabei als Freiform ausgestaltet. Die reflektierende Oberfläche 21 der einzelnen Freiform-Reflektor-Elemente 9 und/oder die reflektierende Oberfläche 19 des Freiform-Reflektors 3 insgesamt kann parabolisch und/oder hyperbolisch und/oder elliptisch geformte Oberflächenbereiche aufweisen.

Die Figur 2 zeigt schematisch eine erfindungsgemäße Vorrichtung 1 zur optischen Erfassung, insbesondere Prüfung, eines Dokuments 11 in einer geschnittenen Ansicht. Die Vorrichtung 1 umfasst eine Dokumentenauflage 12 mit einer Oberfläche 15 zum Auflegen eines Dokuments 11, mindestens ein Beleuchtungselement zum Beleuchten der Oberfläche 15 und eine optische Erfassungseinrichtung 17. Die Dokumentenauflage 12 zum Auflegen eines Dokuments 11 umfasst in der gezeigten Variante einen Rahmen 13, beispielsweise zum Befestigen an einem Gehäuse, und ein in dem Rahmen 13 befestigtes Auflageglas 14 mit einer Oberfläche 15 zum Auflegen eines zu erfassenden oder zu prüfenden Dokuments 11.

Das Beleuchtungselement zum Beleuchten der Oberfläche 15 ist wie bereits im Zusammenhang mit der Figur 1 beschrieben aufgebaut. Es umfasst eine Projektionsoptik 2 zum Aussenden von Licht 10 und einen Freiform-Reflektor 3. Mittels des von dem Freiform-Reflektor 3 reflektierten Lichts 16 wird das Auflageglas 14 und die Oberfläche 15 indirekt beleuchtet.
Das auf den Freiform-Reflektor 3 einfallende Licht wird an jedem Freiform-Reflektor-Element 9 so auf das Auflageglas 14 reflektiert, dass sich dort in Summe eine homogene Lichtintensität einstellt. Infolge der Reflektion durch den Freiform-Reflektor 3 mit einer Vielzahl von Fokuspunkten und/oder Fokusflächen wird eine homogene diffuse Beleuchtung der Auflagefläche 15 erreicht.

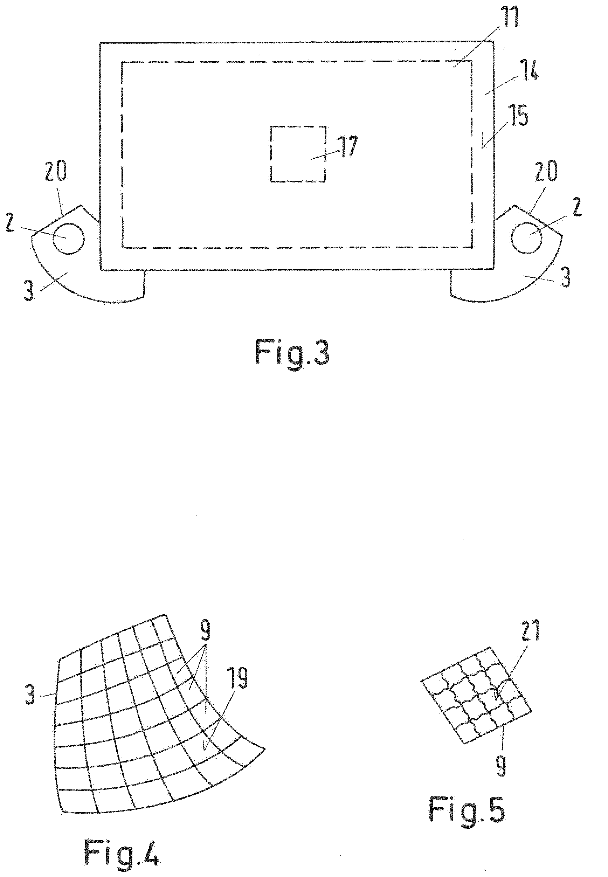

Durch eine entsprechende Ausgestaltung der Geometrie der reflektierenden Oberflächen 21 der Freiform-Reflektor-Elemente 9 (siehe Figuren 4 und 5) und/oder durch eine entsprechende Anordnung der einzelnen Freiform-Reflektor-Elemente 9 zueinander können unerwünschte Beleuchtungswinkel α ausgeschlossen bzw. vermieden werden. Zum Beispiel können in Bezug auf eine Senkrechte 18 zur Oberfläche 15 gemessene Beleuchtungswinkel α in einem Bereich Δα ausgeschlossen werden. Bei dem auszuschließenden Winkelbereich kann es sich vorzugsweise um Winkel α zwischen 30 Grad und 50 Grad (30° ≤ α ≤ 50°) handeln. Bei diesen Winkeln treten, wie sich herausgestellt hat, störende Artefakte auf.

Das von dem Dokument 11 reflektierte Licht wird mit Hilfe des Prüfgeräts 17 empfangen. Das Prüfgerät 17 kann einen Sensor umfassen. Zusätzlich zu dem Sensor kann eine Bilderfassungseinrichtung, beispielsweise mit einem Objektiv und/oder einer Kamera, vorgesehen sein. Das mit dem Prüfgerät 17 und gegebenenfalls weiteren Komponenten erfasste Licht kann in Bezug auf relevante Sicherheitsmerkmale analysiert und geprüft werden. Das Prüfgerät 17 kann in Bezug auf die Senkrechte 18 und ausgehend von der Auflageoberfläche 15 bevorzugt zentral hinter der Dokumentenauflage 12 platziert sein. Andere Ausgestaltungen sind ebenfalls möglich.

Die Figur 3 zeigt schematisch die in der Figur 2 gezeigte Vorrichtung zur optischen Erfassung, insbesondere Prüfung, eines Dokuments in einer Ansicht von oben. In der in der Figur 3 gezeigten Variante sind zwei, jeweils an einer Ecke des Auflageglases 14 angeordnete, Beleuchtungselemente 20 vorgesehen. Alternativ dazu können weitere Beleuchtungselemente 20 an den verbleibenden Ecken des Auflageglases 14 vorgesehen werden. Grundsätzlich ist auch eine andere Anzahl an Beleuchtungselementen 20 und eine andere Platzierung dieser möglich.

Die Figur 4 zeigt schematisch einen beispielhaften Freiform-Reflektor 3 in einer perspektivischen Ansicht. Die reflektierende Oberfläche ist mit der Bezugsziffer 19 gekennzeichnet. Der Freiform-Reflektor 3 umfasst eine Anzahl, bevorzugt eine Vielzahl, an einzelnen Freiform-Reflektor-Elementen 9. Diese können wie oben im Zusammenhang mit der Figur 1 erläutert ausgestaltet sein. In der gezeigten Variante sind die Freiform-Reflektor-Elemente 9 als Kacheln ausgestaltet. Grundsätzlich können die Freiform-Reflektor-Elemente 9 miteinander verbunden sein, vorteilhafterweise übergangslos. Eine übergangslose Verbindung trägt zur Vermeidung ungünstiger Beleuchtungswinkel bei.

Die Figur 5 zeigt schematisch ein einzelnes als Kachel ausgestaltetes Freiform-Reflektor-Element 9 in einer perspektivischen Ansicht. Das Freiform-Reflektor-Element 9 weist eine als Freiform ausgebildete reflektierende Oberfläche 21 auf. Dies ist durch auf der Oberfläche 21 eingezeichnete Gitterlinien veranschaulicht. Die Geometrie der reflektierenden Oberfläche 21 ist mit anderem Worten beliebig gestaltbar. Durch die Berechnung der Oberflächengeometrie jeder Kachel 9 und eine übergangslose Verbindung der Kacheln 9 untereinander werden störende Beleuchtungswinkel vermieden.

Die Verwendung eines indirekten Beleuchtungsprinzips wie in der Figur 1 dargestellt, umfassend eine Projektionsoptik 2 und einen sogenannten "Macrofocal Reflektor" 3, verhindert unerwünschte Artefakte. Mittels einer, zwei oder mehrerer Beleuchtungskomponenten 20 kann, wie in der Figur 2 gezeigt, eine homogene Lichtverteilung auf der Auflageoberfläche 15 erzielt werden. Durch die frei gestaltbare Form jedes Freiform-Reflektor-Elements 9, insbesondere jeder Kachel, und des Freiform-Reflektors 3 selbst ist es zu Beispiel möglich, Beleuchtungswinkel α im Bereich 30°bis 50°und damit Artefakte zu vermeiden. Zudem ist es möglich die Lichtverteilung maximal diffus zu gestalten.

In einer weiteren Ausführungsvariante kann das beschriebene indirekte Beleuchtungsprinzip mit bis zu vier Beleuchtungselementen in einem Dokumenten-Referenzaufnahmesystem bzw. einer zur Dokumenten-Referenzaufnahme ausgelegten Vorrichtung angewendet werden.

### Bezugszeichenliste:

- 1: Vorrichtung zur optischen Erfassung eines Dokuments
- 2: Projektionsoptik zum Aussenden von Licht
- 3: Freiform-Reflektor
- 4: Infrarot-LED
- 5: Weißlicht-LED
- 6: UV-A-LED
- 7: Bauelement zum Mischen von Spektren
- 8: Linse
- 9: Freiform-Reflektor-Element
- 10: von der Projektionsoptik ausgesendetes Licht
- 11: Dokument
- 12: Dokumentenauflage
- 13: Rahmen
- 14: Auflageglas
- 15: Oberfläche zum Auflegen eines Dokuments
- 16: reflektiertes Licht, homogene diffuse Beleuchtung
- 17: optischen Erfassungseinrichtung
- 18: Senkrechte
- 19: reflektierende Oberfläche
- 20: Beleuchtungselement
- 21: reflektierende Oberfläche
- α: Winkel
- Δα: Winkelbereich

## Patentansprüche

1. Vorrichtung (1) zur optischen Erfassung eines Dokuments (11), welche eine Dokumentenauflage (12) mit einer Oberfläche (15) zum Auflegen eines Dokuments (11) und mindestens ein Beleuchtungselement (20) zum Beleuchten der Oberfläche (15) umfasst, wobei das mindestens eine Beleuchtungselement (20) mindestens eine Projektionsoptik (2) zum Aussenden von Licht (10) umfasst,
**dadurch gekennzeichnet, dass**
das mindestens eine Beleuchtungselement (20) mindestens einen Freiform-Reflektor (3) umfasst und zur indirekten Beleuchtung der Oberfläche (15) ausgelegt ist, wobei der Freiform-Reflektor (3) eine Anzahl an Freiform-Reflektor-Elementen (9) umfasst, und der mindestens eine Freiform-Reflektor (3) eine Oberflächengeometrie aufweist, die so ausgestaltet ist, dass die Oberfläche (15) mit festgelegten Beleuchtungswinkeln α nicht beleuchtet wird und/oder dass die Oberfläche (15) nur mit bestimmten Beleuchtungswinkeln beleuchtet wird.

2. Vorrichtung (1) nach Anspruch 1,
**dadurch gekennzeichnet, dass**
die Vorrichtung (1) mindestens zwei Beleuchtungselemente (20) umfasst.

3. Vorrichtung (1) nach Anspruch 1 oder 2,
**dadurch gekennzeichnet, dass**
die einzelnen Freiform-Reflektor-Elemente (9) mit einer individuellen Oberflächengeometrie ausgestaltet sind.

4. Vorrichtung (1) nach einem der Ansprüche 1 bis 3,
**dadurch gekennzeichnet, dass**
eine Anzahl einzelner Freiform-Reflektor-Elemente (9) mit einer identischen Oberflächengeometrie ausgestaltet sind.

5. Vorrichtung (1) nach einem der Ansprüche 1 bis 4,
**dadurch gekennzeichnet, dass**
mindestens ein Freiform-Reflektor (3) einen parabolisch und/oder hyperbolisch und/oder elliptisch geformten reflektierenden Oberflächenbereich umfasst.

6. Vorrichtung (1) nach einem der Ansprüche 1 bis 5,
**dadurch gekennzeichnet, dass**
die Freiform-Reflektor-Elemente als Kacheln ausgestaltet sind.

7. Vorrichtung (1) nach einem der Ansprüche 1 bis 6,
**dadurch gekennzeichnet, dass**
die Freiform-Reflektor-Elemente (9) miteinander verbunden sind.

8. Vorrichtung (1) nach Anspruch 7,
**dadurch gekennzeichnet, dass**
die Freiform-Reflektor-Elemente (9) übergangslos miteinander verbunden sind.

9. Vorrichtung (1) nach einem der Ansprüche 1 bis 8,
**dadurch gekennzeichnet, dass**
der mindestens eine Freiform-Reflektor (3) so ausgestaltet ist, dass die Oberfläche (15) mit Beleuchtungswinkeln α zwischen 30 Grad (30°) und 50 Grad (50°) in Bezug auf die Senkrechte (18) der Obe rfläche (15) nicht beleuchtet wird.

10. Vorrichtung (1) nach einem der Ansprüche 1 bis 9,
**dadurch gekennzeichnet, dass**
die Projektionsoptik (2) zur Mischung von Licht unterschiedlicher Wellenlängen ausgelegt ist.

11. Vorrichtung (1) nach Anspruch 10,
**dadurch gekennzeichnet, dass**
die Projektionsoptik (2) zur Mischung von ultraviolettem Licht und/oder sichtbarem Licht und/oder infrarotem Licht ausgelegt ist.

12. Vorrichtung (1) nach einem der Ansprüche 1 bis 11,
**dadurch gekennzeichnet, dass**
die Vorrichtung (1) mindestens eine optische Erfassungseinrichtung (17) zur Detektion von Licht, welches von einem auf die Oberfläche (15) aufgelegten Dokument (11) reflektiert wird, umfasst.

13. Verfahren zum optischen Erfassen eines an einer Oberfläche (15) angeordneten Dokuments (11), wobei eine Vorrichtung (1) nach einem der Ansprüche 1 bis 12 verwendet wird,
**dadurch gekennzeichnet, dass**
von der Projektionsoptik (2) Licht (10) zu mindestens einem Freiform-Reflektor (3), der eine Anzahl an Freiform-Reflektor-Elementen (9) umfasst, ausgesendet wird, die Oberfläche (15) durch das von dem Freiform-Reflektor (3) reflektierte Licht beleuchtet wird, und das von dem Dokument (11) reflektierte Licht mittels einer optischen Erfassungseinrichtung (17) detektiert wird.

14. Verfahren nach Anspruch 13,
**dadurch gekennzeichnet, dass**
die Oberfläche (15) ausschließlich indirekt beleuchtet wird.

## Claims

1. An apparatus (1) for optically capturing a document (11), comprising a document support (12) having a surface (15) for supporting a document (11) and at least one illumination element (20) for lighting the surface (15), wherein the at least one illumination element (20) comprises at least one projection optic (2) for emitting light (10),
**characterized in that**
the at least one illumination element (20) comprises at least one free-form reflector (3) and is designed for indirect illumination of the surface (15), the free-form reflector (3) comprising a number of free-form reflector elements (9), and the at least one free-form reflector (3) having a surface geometry which is designed in such a way that the surface (15) is not lighted with specified illumination angles and/or that the surface (15) is lighted only with specified illumination angles.

2. The apparatus (1) according to claim 1, wherein the apparatus (1) comprises at least two illumination elements (20).

3. The apparatus (1) according to claim 1 or 2, wherein the individual free-form reflector elements (9) are designed with an individual surface geometry.

4. The apparatus (1) according to any one of claims 1 to 3, wherein a number of individual free-form reflector elements (9) are designed with an identical surface geometry.

5. The apparatus (1) according to any one of claims 1 to 4, wherein at least one free-form reflector (3) comprises a parabolically and/or hyperbolically and/or elliptically shaped reflecting surface area.

6. The apparatus (1) according to any one of claims 1 to 5, wherein the free-form reflector elements are configured as tiles.

7. The apparatus (1) according to any one of claims 1 to 6, wherein the free-form reflector elements (9) are connected to each other.

8. The apparatus (1) according to claim 7, wherein the free-form reflector elements (9) are connected to each other without transition.

9. The apparatus (1) according to any one of claims 1 to 8, wherein the at least one free-form reflector (3) is designed such that the surface (15) is not lighted with illumination angles α between 30 degrees (30°) and 50 degrees (50°) in relation to the perpendicular (18) of the surface (15).

10. The apparatus (1) according to any one of claims 1 to 9, wherein the projection optics (2) is designed for mixing light of different wavelengths.

11. The apparatus (1) according to claim 10, wherein the projection optics (2) is designed for mixing ultraviolet light and/or visible light and/or infrared light.

12. The apparatus (1) according to any one of claims 1 to 11, wherein the apparatus (1) comprises at least one optical detection device (17) for detecting light reflected from a document (11) placed on the surface (15).

13. A method of optically capturing a document (11) disposed on a surface (15), using a apparatus (1) according to any one of claims 1 to 12, **characterized in that**
light (10) is emitted from the projection optics (2) to at least one free-form reflector (3) comprising a number of free-form reflector elements (9), the surface (15) is lighted by the light reflected from the free-form reflector (3), and the light reflected from the document (11) is detected by means of an optical detection device (17).

14. The method according to claim 13, wherein the surface (15) is lighted exclusively indirectly.

## Revendications

1. Dispositif (1) destiné à la reconnaissance optique d'un document (11), lequel comprend un support de document (12) avec une surface (15) destinée à poser un document (11) et au moins un élément d'éclairage (20) destiné à éclairer la surface (15), dans lequel l'au moins un élément d'éclairage (20) comprend au moins une optique de projection (2) destinée à émettre de la lumière (10),
**caractérisé en ce que**
l'au moins un élément d'éclairage (20) comprend au moins un réflecteur à forme libre (3) et est conçu pour un éclairage indirect de la surface (15), dans lequel le réflecteur de forme libre (3) comprend un certain nombre d'éléments de réflecteur à forme libre (9), et l'au moins un réflecteur de forme libre (3) présente une géométrie de surface qui est conçue de telle sorte que la surface (15) n'est pas éclairée avec des angles d'éclairage α définis et/ou **en ce que** la surface (15) n'est éclairée qu'avec des angles d'éclairage définis.

2. Dispositif (1) selon la revendication 1,
**caractérisé en ce que**
le dispositif (1) comprend au moins deux éléments d'éclairage (20).

3. Dispositif (1) selon la revendication 1 ou 2,
**caractérisé en ce que**
les éléments réflecteurs à forme libre (9) individuels sont conçus avec une géométrie de surface individuelle.

4. Dispositif (1) selon l'une quelconque des revendications 1 à 3,
**caractérisé en ce qu'**
un certain nombre d'éléments réflecteurs à forme libre (9) individuels sont conçus avec une géométrie de surface identique.

5. Dispositif (1) selon l'une quelconque des revendications 1 à 4,
**caractérisé en ce qu'**
au moins un réflecteur à forme libre (3) comprend une région de surface réfléchissante de forme parabolique et/ou hyperbolique et/ou elliptique.

6. Dispositif (1) selon l'une quelconque des revendications 1 à 5, **caractérisé en ce que**
les éléments réflecteurs à forme libre sont conçus comme des tuiles.

7. Dispositif (1) selon l'une quelconque des revendications 1 à 6, **caractérisé en ce que**
les éléments réflecteurs à forme libre (9) sont reliés ensemble.

8. Dispositif (1) selon la revendication 7,
**caractérisé en ce que**
les éléments réflecteurs à forme libre (9) sont reliés ensemble sans transition.

9. Dispositif (1) selon l'une quelconque des revendications 1 à 8, **caractérisé en ce que**
l'au moins un réflecteur à forme libre (3) est conçu de telle sorte que la surface (15) n'est pas éclairée avec des angles d'éclairage α compris entre 30 degrés (30°) et 50 degrés (50°) par rapport à la perpendiculaire (18) de la surface (15).

10. Dispositif (1) selon l'une quelconque des revendications 1 à 9, **caractérisé en ce que**
l'optique de projection (2) est conçue pour mélanger de la lumière de longueurs d'onde différentes.

11. Dispositif (1) selon la revendication 10,
**caractérisé en ce que**
l'optique de projection (2) est conçue pour mélanger la lumière ultraviolette et/ou la lumière visible et/ou la lumière infrarouge.

12. Dispositif (1) selon l'une quelconque des revendications 1 à 11, **caractérisé en ce que**
le dispositif (1) comprend au moins un appareil de reconnaissance (17) optique destiné à détecter la lumière, laquelle est réfléchie par un document (11) placé sur la surface (15).

13. Procédé destiné à la reconnaissance optique d'un document (11) agencé sur une surface (15), dans lequel un dispositif (1) selon l'une quelconque des revendications 1 à 12 est utilisé,
**caractérisé en ce que**
de la lumière (10) est émise par l'optique de projection (2) vers au moins un réflecteur à forme libre (3) qui comprend un certain nombre d'éléments réflecteurs à forme libre (9), la surface (15) est éclairée par la lumière réfléchie par le réflecteur à forme libre (3), et la lumière réfléchie par le document (11) est détectée au moyen d'un appareil de reconnaissance (17) optique.

14. Procédé selon la revendication 13,
**caractérisé en ce que**
la surface (15) est éclairée de manière indirecte uniquement.
